# FASCICULE DE BREVET EUROPEEN

(11) **EP 2 210 799 B1**
(45) Date de publication et mention de la délivrance du brevet: **21.03.2012**
(21) Numéro de dépôt: 10305046.4
(22) Date de dépôt: 14.01.2010
(51) Int. Cl.: B62D 21/15, B62D 35/02

(54) **Ensemble de carénage sous moteur pour une structure avant d'un véhicule automobile**
Verkleidungseinheit unter dem Motor für eine Frontstruktur eines Kraftfahrzeugs
Under-engine fairing assembly for a front structure of an automobile

(30) Priorité: 23.01.2009 FR 0950406
(43) Date de publication de la demande: 28.07.2010
(73) Titulaire: Faurecia Bloc Avant, 92000 Nanterre (FR)
(72) Inventeur: Gonin, Vincent, 25600, SOCHAUX (FR)
(74) Mandataire: Domenego, Bertrand

(56) Documents cités:
- EP-A1- 1 190 937
- EP-A1- 1 652 733
- EP-A1- 1 972 527
- WO-A1-2006/008137
- WO-A2-2007/147996

## Description

La présente invention concerne un ensemble de carénage sous moteur pour une structure avant d'un véhicule automobile.

Jusqu'à présent, les carénages sous moteur, qui sont montés, sur de nombreux véhicules automobiles, sont le plus souvent constitués par de simples plaques métalliques ou en matière thermoplastique renforcée. Ces plaques sont fixées à l'extrémité basse du pare-chocs et sous le moteur en appui sur le berceau moteur.

Ces carénages ont pour principale fonction de fermer la partie inférieure du berceau moteur afin d'isoler le moteur de l'extérieur et de le protéger des chocs éventuels lors d'un passage de bord de trottoir par exemple. Ils ont également pour fonction de protéger le moteur des projections d'eau et de boue et ils permettent également d'éviter que les écoulements éventuels d'huile provenant du moteur ne se répandent sur le sol.

Par ailleurs, dans le cadre de la sécurité passive qui concerne l'ensemble des moyens et des actions mises en oeuvre pour diminuer les conséquences d'un accident, les constructeurs automobiles doivent faire face à trois préoccupations majeures.

La première préoccupation consiste à assurer la protection des occupants du véhicule, notamment lors d'un choc frontal.

La deuxième préoccupation consiste à maîtriser les coûts de réparation du véhicule lors d'un choc dit urbain, c'est-à-dire à faible vitesse.

Enfin, la troisième préoccupation des constructeurs consiste à limiter l'agressivité du véhicule vis-à-vis des autres usagers de la route et notamment les piétons afin de réduire les risques de blessures graves au niveau des jambes.

La conception d'un véhicule automobile doit donc aujourd'hui répondre à de nombreuses réglementations et doit donc subir des procédures d'essais, entre autres, pour le choc piéton et le choc à faible vitesse au niveau de la réparabilité.

Pour cela, l'avant d'un véhicule automobile comporte une structure comprenant une partie inférieure couramment appelée « voie basse avant » munie d'un berceau supportant la suspension avant du véhicule et d'une poutre basse de pare-chocs transversale, reliée à chacune de ses extrémités au berceau par une prolonge s'étendant vers l'avant du véhicule et de direction générale sensiblement horizontale.

Ces prolonges de berceau formées chacune par un corps longitudinal creux en acier ou en aluminium, jouent le rôle de poutres d'absorption de chocs et participent à la prestation choc piéton ainsi qu'à la prestation choc urbain en temps qu'éléments destinés à transmettre les efforts du choc.

Ce type d'architecture a pour principal inconvénient de présenter une masse élevée ce qui alourdit le poids général du véhicule automobile. De plus, un tel ensemble est constitué d'une multitudes d'éléments et l'assemblage sur le véhicule requiert un nombre d'opérations élevées ce qui grève bien évidemment le coût de production du véhicule.

Enfin, l'absence d'élément transversal reliant les prolonges est préjudiciable à la stabilité de l'ensemble dans le cas d'un choc décalé.

Pour résoudre ce problème, les constructeurs automobiles ont envisagé d'utiliser l'ensemble de carénage sous moteur pour absorber une partie de l'énergie cinétique dans le cas d'un choc.

A cet effet, on connaît dans le FR-A-2 814 425, un carénage sous moteur pour véhicule automobile qui comporte une plaque horizontale et deux profilés latéraux formant des renforts venus de matière avec la plaque, notamment en matière thermoplastique ou réalisés indépendamment en métal ou en matière plastique et rapportés sur la plaque, par exemple par collage ou par vissage.

Dans le cas où ces renforts sont venus de matière avec la plaque, ils sont obtenus par injection, compression ou moulage et forment chacun un corps plein ce qui ne permet pas d'obtenir une tenue satisfaisante du renfort en compression.

Dans le cas où ces renforts sont rapportés sur la plaque plane, ils induisent un nombre élevé de pièces pour l'assemblage des éléments entre eux ce qui complique le montage et ce qui induit un surcoût important.

Un autre exemple d'ensemble de carénage, comme décrit par le préambule de la revendication 1, est décrit dans WO 2007/147996.

L'invention a pour but de proposer un ensemble carénage sous moteur qui permet d'éviter ces inconvénients et qui possède des propriétés mécaniques adaptées à la gestion des chocs, tout en autorisant une grande liberté de forme.

L'invention a donc pour objet un ensemble de carénage selon la revendication 1.

L'ensemble de carénage selon l'invention pourra présenter en outre au moins l'une des caractéristiques suivantes :
- ledit au moins renfort tubulaire intermédiaire comporte deux branches longitudinales formant un U comportant une branche centrale transversale de liaison déterminant ladite au moins zone d'appui,
- ledit au moins renfort tubulaire intermédiaire comporte deux branches longitudinales formant un V dont le point de raccordement détermine ladite au moins zone d'appui,
- les extrémités libres des branches dudit au moins renfort tubulaire intermédiaire sont reliées aux renforts tubulaires latéraux pour former un tube continu,
- ledit au moins renfort tubulaire intermédiaire s'étend transversalement entre les extrémités des renforts tubulaires latéraux situées en regard de la poutre basse pour former un tube continu,
- ledit au moins renfort tubulaire intermédiaire s'étend transversalement entre les extrémités des renforts tubulaires latéraux situées en regard du berceau moteur pour former un tube continu,
- les renforts tubulaires latéraux et/ou ledit au moins renfort tubulaire intermédiaire comporte extérieurement un réseau de nervures longitudinales et/ou transversales,
- la face supérieure de l'écran comporte un réseau de nervures longitudinales et/ou transversales,
- les deux faces de l'écran comportent un réseau de nervures longitudinales et/ou transversales, et
- l'ensemble est réalisé par un procédé de moulage par injection d'une matière plastique, de préférence en polypropylène thermoplastique renforcé et, les renforts sont formés par un procédé d'injection d'un fluide.

L'invention a également pour objet un véhicule automobile comprenant un ensemble de carénage sous moteur, caractérisé en ce que le carénage sous moteur est un ensemble de carénage tel que précédemment défini.

L'invention sera mieux comprise à la lecture de la description qui va suivre, donnée à titre d'exemple, et faite en se référant aux dessins annexés, sur lesquels :
- la Fig. 1 est une vue schématique en perspective éclatée d'une partie inférieure d'une structure avant d'un véhicule automobile, comportant un ensemble de carénage, conforme à l'invention,
- la Fig. 2 est une vue schématique en perspective d'une variante de l'ensemble de carénage, conforme à l'invention, et
- les Figs 3 et 4 sont des vues schématiques de dessus de deux autres variantes de l'ensemble de carénage, conforme à l'invention.

Dans ce qui suit, le orientations utilisées sont les orientations habituelles d'un véhicule automobile et les termes « avant » et « arrière » s'entendent par rapport au sens de marche normale du véhicule.

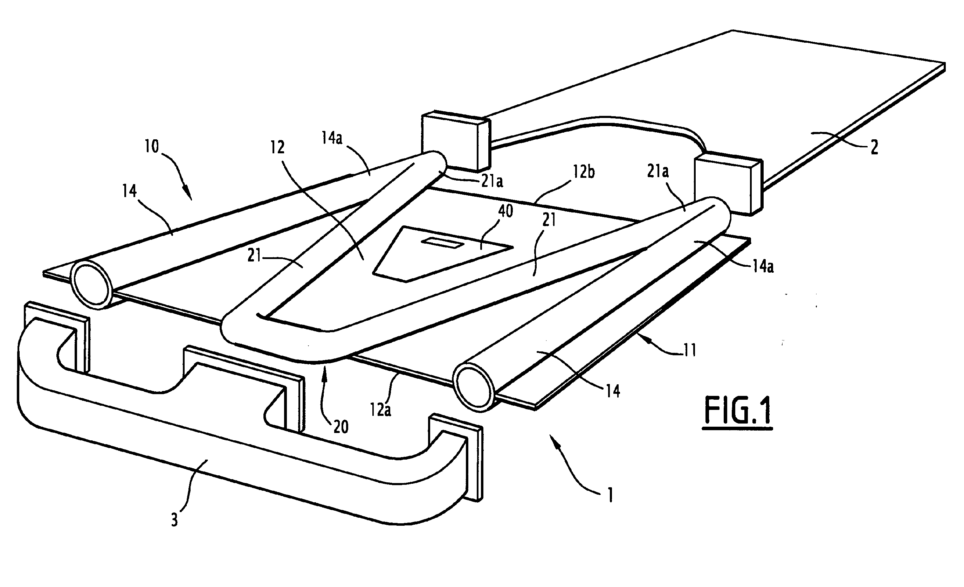

Sur la Fig. 1, on a représenté schématiquement une partie d'une structure avant d'un véhicule automobile et plus particulièrement la zone inférieure de cette structure avant couramment appelée « voie basse avant ».

Comme montré sur cette figure, cette structure avant désignée dans son ensemble par la référence 1, comprend notamment un berceau 2 comportant généralement une plate-forme munie d'attaches, non représentées, destinées à supporter la suspension avant du véhicule, elle-même liée par ailleurs au train avant de ce véhicule.

La structure avant 1 comprend également une poutre basse 3 transversale de pare-chocs s'étendant transversalement par rapport à l'axe longitudinal du véhicule.

La structure avant basse 1 représentée à la Fig. 1 comprend également un ensemble de carénage désigné par la référence générale 10 s'étendant entre la poutre basse 3 transversale et le berceau moteur 2.

D'une manière générale, l'ensemble de carénage 10 est formé par une pièce 11 monobloc comportant un écran 12 sensiblement plan et s'étendant entre ladite poutre basse 3 et le berceau moteur 2. La pièce 11 formant l'ensemble de carénage 10 comporte également au moins une paire de renforts 14 tubulaires et latéraux disposés longitudinalement de part et d'autre de l'écran 12.

Sur les différents modes de réalisation représentés sur les figures, l'écran 12 comporte deux renforts tubulaires 14 latéraux, disposés de part et d'autre de cet écran 12 et s'étendant sur toute la longueur dudit écran 12. Chaque renfort tubulaire 14 est creux et est destiné à relier la poutre basse 3 et le berceau moteur 2. Chacun desdits renforts tubulaires 14 s'étend entre le bord avant 12a de l'écran 12 et le bord arrière 12b de cet écran 12 et forme une prolonge de liaison entre ladite poutre basse 3 et ledit berceau moteur 2.

De préférence, l'écran 12 de l'ensemble de carénage 10 comporte, entre les renforts tubulaires 14 latéraux, au moins un renfort tubulaire 20 intermédiaire s'étendant sur toute la longueur de l'écran 12, c'est-à-dire entre le bord avant 12a et le bord arrière 12b et ledit au moins renfort tubulaire 20 détermine au moins une zone d'appui pour la poutre basse 3.

Dans l'exemple de réalisation représenté à la Fig. 1, l'écran 12 comporte un renfort tubulaire 20 intermédiaire formé de deux branches longitudinales 21 formant un U comprenant une branche centrale 22 transversale de liaison. La branche centrale 22 est ménagée sur le bord avant 12a de l'écran 12 et forme une zone d'appui central pour la poutre basse 3.

Les extrémités libres 21 a des branches 21 du renfort tubulaire 20 intermédiaires sont reliées chacune à une extrémité arrière 14a d'un renfort tubulaire 14 latérale de façon à former un tube continu comprenant les renforts tubulaires 14 latéraux et le renfort tubulaire 20 intermédiaire.

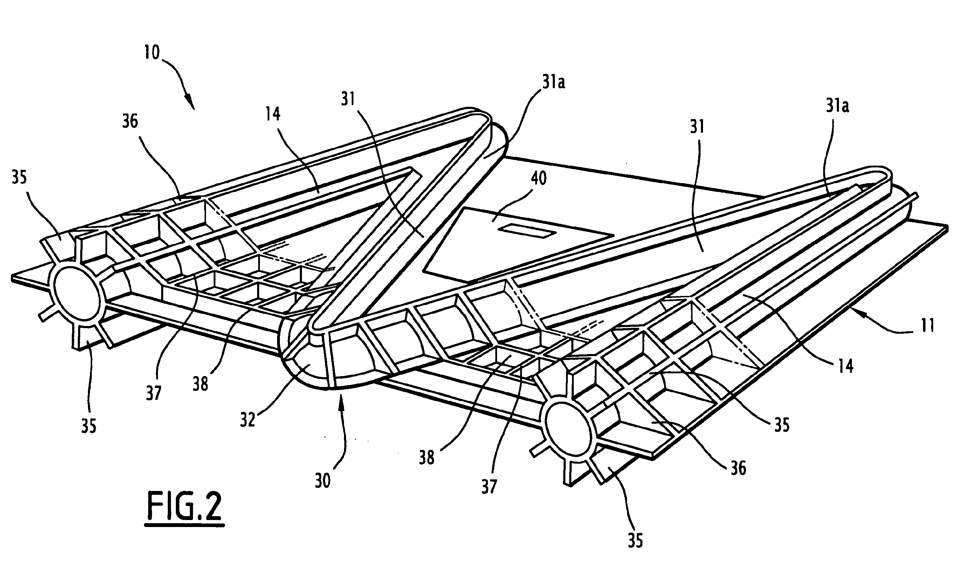

Selon un autre mode de réalisation représenté à la Fig. 2, l'écran 12 comporte un renfort tubulaire 30 intermédiaire comprenant deux branches longitudinales 31 formant un V dont la pointe 22 est disposée sur le bord avant 12a dudit écran 12 afin de former la zone d'appui pour la poutre basse 3 de pare-chocs.

Dans ce mode de réalisation également, les extrémités 31 a des branches longitudinales 31 sont reliées aux extrémités arrière 14a des renforts latéraux 14 de façon à former un tube continu.

Dans le mode de réalisation représenté à la Fig. 2, les renforts tubulaires 14 latéraux et les branches 31 du renfort tubulaire 30 intermédiaire comportent extérieurement un réseau de nervures longitudinales 35 et transversale 36.

Selon une variante, seuls les renforts tubulaires 14 latéraux ou seules les branches 31 du renfort tubulaire 30 intermédiaire peuvent comporter un réseau de nervures longitudinales 35 et transversales 36.

Dans ce mode de réalisation également, au moins l'une des faces de l'écran 12 et, de préférence, la face supérieure dudit écran 12 comporte un réseau de nervures longitudinales 37 et transversales 38.

Selon encore une autre variante, les réseaux de nervures peuvent être formés uniquement de nervures longitudinales ou transversales.

Selon une variante, les deux faces de l'écran 12 peuvent comporter un réseau de nervures longitudinales 37 et transversales 38.

Les rainures longitudinales 35 et 37 et transversales 36 et 38 des réseaux de nervures ménagées sur les renforts tubulaires 14 et 30 ainsi que sur l'écran 12 permettent d'augmenter l'inertie de la pièce 11 et d'éviter le flambage de cette pièce 11.

Les réseaux de nervures longitudinales et transversales peuvent être également ménagés sur la-pièce 11 représenté à la Fig. 1.

Ainsi que montré sur les Figs. 1 et 2, l'écran 12 comporte une trappe 40 qui, après ouverture, permet d'accéder au compartiment moteur.

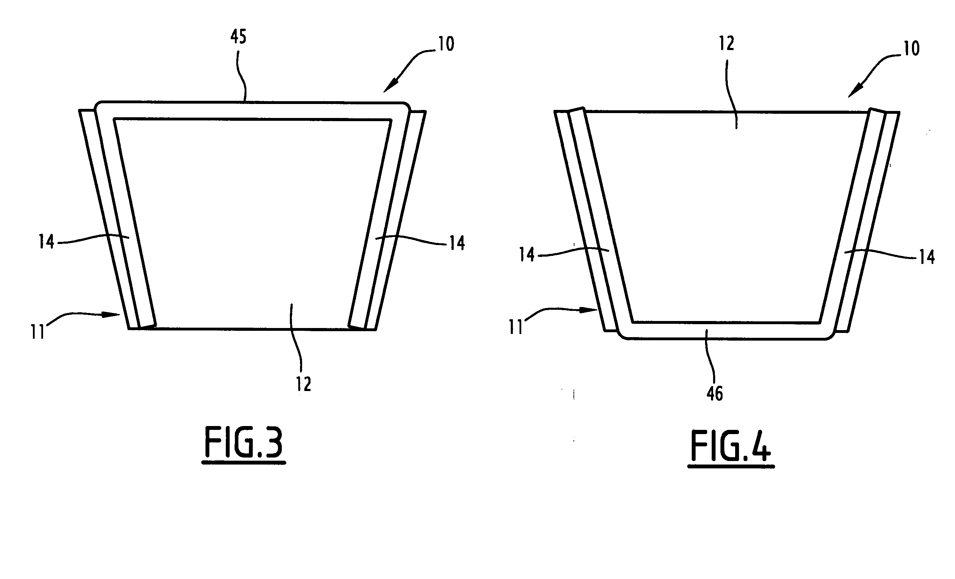

Selon deux autres modes de réalisation représentés sur les Figs. 3 et 4, l'écran 12 formant la pièce 11 comporte au moins un renfort tubulaire intermédiaire s'étendant transversalement par rapport à l'axe longitudinal de ladite pièce 11.

Selon le mode de réalisation représenté à la Fig. 3, l'écran 12 comporte un renfort tubulaire 45 intermédiaire s'étendant transversalement entre les extrémités des renforts tubulaires 14 latéraux situées en regard de la poutre basse 2 et ce renfort tubulaire 45 constitue avec lesdits renforts latéraux 14 un tube continu.

Le renfort tubulaire 45 intermédiaire constitue une zone d'appui pour la poutre basse 3 de pare-chocs.

Selon le mode de réalisation représenté à la Fig. 4, l'écran 12 comporte un renfort tubulaire 46 intermédiaire qui s'étend transversalement entre les extrémités des renforts tubulaires 14 latéraux situées en regard du berceau moteur 2. Ce renfort tubulaire 46 intermédiaire constitue avec les renforts tubulaires 14 latéraux un tube continu.

Dans ces deux modes de réalisation, la face supérieure ou les deux faces de l'écran 12 ainsi que les renforts tubulaires 14 latéraux et les renforts tubulaires 45 et 46 intermédiaires peuvent aussi comporter un réseau de nervures longitudinales et/ou transversales.

La pièce 11 de l'ensemble de carénage 10 formé par l'écran 12 et les renforts tubulaires 14 latéraux et/ou les renforts tubulaires 20, 30, 45, 46 est réalisée en matière thermoplastique, de préférence en polymère thermoplastique renforcé, notamment en polypropylène chargé de fibres de verre. Les renforts latéraux et intermédiaires sont formés par un procédé connu d'injection d'un fluide comme par exemple de l'eau.

La pièce monobloc 11 de l'ensemble de carénage 10 intercalée et en appui sur la poutre basse 3 de pare-chocs et le berceau moteur 2 a une double fonction.

La première fonction assurée par les renforts tubulaires latéraux et intermédiaires ayant une géométrie creuse et élancée réside dans la rigidification de la pièce 11 et dans la transmission des efforts longitudinaux. Le rôle de ces renforts est proche de celui du traditionnel des prolonges de berceau.

La seconde fonction est réalisée par l'écran 12 constituant le carénage sous moteur qui permet d'assurer la protection des éléments mécaniques contre les chocs et les salissures.

Cet écran sensiblement plan et horizontal est idéalement renforcé d'un réseau de nervures au moins sur sa face supérieure, c'est-à-dire celle située en regard du compartiment moteur.

Le procédé de formation des renforts par injection d'un fluide autorise une grande liberté sur la forme et la disposition de ces renforts permettant ainsi d'apporter une rigidité supplémentaire dans des zones déterminées.

Dans une géométrie privilégiée, le renfort transversal apporte de la rigidité en partie frontale médiane à l'ensemble de carénage, ce qui permet à la poutre basse de prendre appui sur la pièce en partie centrale.

Le renfort tubulaire intermédiaire permet de solidariser les deux renforts tubulaires latéraux et de stabiliser la structure basse en flambage.

Ainsi, l'ensemble de carénage bénéficie d'une meilleure cohésion, c'est-à-dire une meilleure stabilité en flambement horizontal et permet de dissiper une fraction significative de l'énergie par cisaillement, notamment lors d'un choc frontal décalé.

La liaison de la pièce 11 de l'ensemble de carénage 10 avec respectivement la poutre basse 3 et le berceau moteur 2, est réalisée par exemple par des liaisons rigides, notamment par vissage sur des platines, non représentées, par exemple venues de matière avec cette pièce 11 ou ménagées sur le berceau 2 et la poutre basse 3.

Eventuellement, la pièce 11 de l'ensemble de carénage 10 comporte des cales élastomères intercalées au niveau de sa liaison avec le berceau moteur 2 afin de préserver l'acoustique vibratoire et de jouer le rôle de silent bloc.

Divers éléments peuvent être disposés entre la pièce 11 de l'ensemble de carénage 10 afin d'assurer la transmission des efforts en voie basse et les brancards qui assurent la transmission des efforts en voie haute. Par exemple, des pendeloques peuvent être disposées pour connecter rigidement l'extrémité avant des brancards avec les extrémités avant des renforts tubulaires latéraux. Cette liaison peut être amortie par des cales élastomères. De même, des tirants peuvent être installés entre les brancards et la partie médiane des renforts tubulaires latéraux afin de stabiliser verticalement l'ensemble de la structure en flambement.

L'ensemble de carénage selon l'invention présente de nombreux avantages par rapport aux dispositifs utilisés jusqu'à présent.

L'ensemble de carénage permet d'assurer une protection efficace des piétons du fait de l'extension des zones d'appui pour la poutre basse piéton, notamment en partie frontale médiane de la pièce constituant l'ensemble de carénage ce qui est favorable à sa rigidité et à la sauvegarde du genoux d'un piéton, notamment en cas de choc.

Pour la réparabilité, l'ensemble de carénage assure une partie de la dissipation d'énergie dans le cas d'un choc à moyenne vitesse et il soulage donc les brancards et peut travailler en cisaillement.

La voie basse ainsi formée constituée par la poutre basse, l'ensemble de carénage et le berceau permet de dissiper une fraction de l'énergie et de répartir les efforts de manière plus homogène sur la structure du véhicule afin d'éviter ou de réduire les intrusions dans l'habitacle.

Dans le cas d'un choc à haute vitesse, la voie basse ainsi réalisée empêche donc le chevauchement des brancards de deux véhicules et réduit l'agressivité des structures de chaque véhicule dans le cas d'un choc décalé.

Enfin, l'ensemble de carénage selon l'invention permet de réduire le nombre de pièces et les opérations d'assemblage du fait qu'il est constitué par une pièce monobloc, réalisée par une injection d'un fluide dans un polymère thermoplastique renforcé.

## Revendications

1. Ensemble de carénage (10) sous moteur pour une structure avant d'un véhicule automobile, ladite structure avant comprenant notamment une poutre basse (3) transversale et un berceau moteur (2),
- l'ensemble (10) étant formé par une pièce (11) monobloc comportant un écran (12) s'étendant entre la poutre basse (3) et le berceau moteur (2) et au moins une paire de renforts tubulaires (14) latéraux disposés longitudinalement et de part et d'autre de l'écran (12) et destinés à relier ladite poutre basse (3) et ledit berceau moteur (2), **caractérisé en ce que** :
- l'écran (12) comporte, entre les renforts tubulaires (14) latéraux au moins un renfort tubulaire (20 ; 30 ; 45 ; 46) intermédiaire, et
- ledit au moins renfort tubulaire (20 ; 30) intermédiaire s'étend sur toute la longueur de l'écran (12) et détermine au moins une zone d'appui (22 ; 32) pour la poutre basse (3).

2. Ensemble de carénage selon la revendication 1, **caractérisé en ce que** ledit au moins renfort tubulaire (20) intermédiaire comporte deux branches longitudinales (21) formant un U comprenant une branche centrale (22) de liaison déterminant ladite au moins zone d'appui.

3. Ensemble de carénage selon la revendication 1, **caractérisé en ce que** ledit au moins renfort tubulaire (30) intermédiaire comporte deux branches longitudinales (31) formant un V dont la pointe de raccordement (32) détermine au moins la zone d'appui.

4. Ensemble de carénage (10) selon la revendication 2 ou 3, **caractérisé en ce que** les extrémités libres (21 a ; 31a) des branches (21 ; 31) dudit au moins renfort tubulaire (20 ; 30) intermédiaire sont reliées au renfort tubulaire (14) latéraux pour former un tube continu.

5. Ensemble de carénage (10) selon la revendication 1, **caractérisé en ce que** ledit au moins renfort tubulaire (45) intermédiaire s'étend transversalement entre les extrémités des renforts tubulaires (14) latéraux situées en regard de la poutre basse (3).

6. Ensemble de carénage (10) selon la revendication 1, **caractérisé en ce que** ledit au moins renfort tubulaire (46) intermédiaire s'étend transversalement entre les extrémités des renforts tubulaires (14) latéraux situés en regard du berceau moteur (2) pour former un tube continu.

7. Ensemble de carénage selon l'une quelconque des revendications précédentes, **caractérisé en ce que** les renforts tubulaires (14) et/ou ledit au moins renfort tubulaire (20 ; 30 ; 45 ; 46) intermédiaire comporte extérieurement un réseau de nervures longitudinales (35) et/ou transversales (36).

8. Ensemble de carénage (10) selon l'une quelconque des revendications précédentes, **caractérisé en ce que** la face supérieure de l'écran (12) comporte un réseau de nervures longitudinales (37) et/ou transversales (38).

9. Ensemble de carénage selon l'une quelconque des revendications 1 à 7, **caractérisé en ce que** les deux faces de l'écran 1(12) comportent un réseau de nervures longitudinales (37) et/ou transversales (38).

10. Ensemble de carénage selon l'une quelconque des revendications précédentes, **caractérisé en ce qu'**il est réalisé par un procédé de moulage par injection d'une matière thermoplastique, de préférence en polypropylène thermoplastique renforcé et les renforts sont formés par un procédé d'injection d'un fluide.

11. Véhicule automobile comprenant un ensemble de carénage (10) sous moteur **caractérisé en ce que** le carénage sous moteur est un ensemble de carénage (10) selon l'une quelconque des revendications précédentes.

## Claims

1. Streamlining unit (10) below the engine for a front structure of a motor vehicle, the said front structure comprising, in particular, a bottom cross-beam (3) and an engine cradle (2),
- the unit (10) being formed by a one-piece component (11) having a screen (12) extending between the bottom beam (3) and the engine cradle (2) and at least one pair of lateral tubular reinforcements (14) which are disposed longitudinally and on either side of the screen (12) and are intended to connect the said bottom beam (3) and the said engine cradle (2), **characterised in that**
- the screen (12) has, between the lateral tubular reinforcements (14), at least one intermediate tubular reinforcement (20; 30; 45; 46), and
- the said intermediate tubular reinforcement (20; 30) extends over the entire length of the screen (12) and determines at least one supporting zone (22; 32) for the bottom beam (3).

2. Streamlining unit according to claim 1, **characterised in that** the said at least intermediate tubular reinforcement (20) has two longitudinal branches (21) forming a U comprising a central linking branch (22) determining the said at least supporting zone.

3. Streamlining unit according to claim 1, **characterised in that** the said at least intermediate tubular reinforcement (30) has two longitudinal branches (31) forming a V, the connecting point (32) of which determines at least the supporting zone.

4. Streamlining unit (10) according to claim 2 or 3, **characterised in that** the free ends (21a; 31a) of the branches (21; 31) of the said at least intermediate tubular reinforcement (20; 30) are connected to the lateral tubular reinforcement (14) so as to form a continuous tube.

5. Streamlining unit (10) according to claim 1, **characterised in that** the said at least intermediate tubular reinforcement (45) extends transversely between those ends of the lateral tubular reinforcements (14) which are situated facing the bottom beam (3).

6. Streamlining unit (10) according to claim 1, **characterised in that** the said at least intermediate tubular reinforcement (46) extends transversely between the ends of the lateral tubular reinforcements (14) located facing the engine cradle (2) so as to form a continuous tube.

7. Streamlining unit according to any of the preceding claims, **characterised in that** the tubular reinforcements (14) and/or the said at least intermediate tubular reinforcement (20; 30; 45; 46) have/has, on the outside, a network of longitudinal ribs (35) and/or transverse ribs (36).

8. Streamlining unit (10) according to any of the preceding claims, **characterised in that** the upper face of the screen (12) has a network of longitudinal ribs (37) and/or transverse ribs (38).

9. Streamlining unit according to any of claims 1 to 7, **characterised in that** the two faces of the screen (12) have a network of longitudinal ribs (37) and/or transverse ribs (38).

10. Streamlining unit according to any of the preceding claims, **characterised in that** it is produced by a process for injection-moulding a thermoplastic material, preferably in reinforced thermoplastic polypropylene, and the reinforcements are formed by a process for injecting a fluid.

11. Motor vehicle comprising a streamlining unit (10) below the engine, **characterised in that** the fairing below the engine is a streamlining unit (10) according to any of the preceding claims.

## Patentansprüche

1. Untermotorverkleidungsbaugruppe (10) für einen Vorderaufbau eines Kraftfahrzeugs, wobei der Vorderaufbau insbesondere einen unteren Querträger (3) und eine Motorhalterung (2) umfasst,
- wobei die Baugruppe aus einem einstückigen Blockgussteil (11) gebildet ist, das eine Schutzabdeckung (12), die sich zwischen dem unteren Träger (3) und der Motorhalterung (2) erstreckt, und mindestens ein Paar seitlicher rohrförmiger Versteifungen (14) umfasst, die der Länge nach und auf beiden Seiten der Schutzabdeckung (12) angeordnet und dazu bestimmt sind, den unteren Träger (3) und die Motorhalterung (2) miteinander zu verbinden,
**dadurch gekennzeichnet, dass**
- die Schutzabdeckung (12) zwischen den seitlichen rohrförmigen Versteifungen mindestens eine rohrförmige Zwischenversteifung (20; 30; 45; 46) umfasst, und
- die mindestens eine rohrförmige Zwischenversteifung (20; 30) sich über die gesamte Länge der Schutzabdeckung (12) erstreckt und mindestens einen Anlagebereich (22; 32) für den unteren Träger (3) bestimmt.

2. Verkleidungsbaugruppe nach Anspruch 1, **dadurch gekennzeichnet, dass** die mindestens eine rohrförmige Zwischenversteifung (20) zwei Längsschenkel (21) umfasst und dabei ein U mit einem zentralen Verbindungsschenkel (22) bildet, der den mindestens einen Anlagebereich bestimmt.

3. Verkleidungsbaugruppe nach Anspruch 1, **dadurch gekennzeichnet, dass** die mindestens eine rohrförmige Zwischenversteifung (30) zwei Längsschenkel (31) umfasst, die ein V bilden, dessen Verbindungsspitze (32) zumindest den Anlagebereich bestimmt.

4. Verkleidungsbaugruppe (10) nach Anspruch 2 oder 3, **dadurch gekennzeichnet, dass** die freien Enden (21a; 31a) der Schenkel (21; 31) der mindestens einen rohrförmigen Zwischenversteifung (20; 30) mit den seitlichen rohrförmigen Versteifungen (14) verbunden sind, um ein durchgehendes Rohr zu bilden.

5. Verkleidungsbaugruppe (10) nach Anspruch 1, **dadurch gekennzeichnet, dass** sich die mindestens eine rohrförmige Zwischenversteifung (45) quer zwischen den dem unteren Träger (3) gegenüberstehenden Enden der seitlichen rohrförmigen Versteifungen (14) erstreckt.

6. Verkleidungsbaugruppe (10) nach Anspruch 1, **dadurch gekennzeichnet, dass** sich die mindestens eine rohrförmige Zwischenversteifung (46) quer zwischen den der Motorhalterung (2) gegenüberstehenden Enden der seitlichen rohrförmigen Versteifungen (14) erstreckt, um ein durchgehendes Rohr zu bilden.

7. Verkleidungsbaugruppe nach einem der vorhergehenden Ansprüche, **dadurch gekennzeichnet, dass** die rohrförmigen Versteifungen (14) und/oder die mindestens eine rohrförmige Zwischenversteifung (20; 30; 45; 46) außen ein Netz von Längsrippen (35) und/oder Querrippen (36) umfassen/umfasst.

8. Verkleidungsbaugruppe (10) nach einem der vorhergehenden Ansprüche, **dadurch gekennzeichnet, dass** die Oberseite der Schutzabdeckung (12) ein Netz von Längsrippen (37) und/oder Querrippen (38) umfasst.

9. Verkleidungsbaugruppe (10) nach einem der Ansprüche 1 bis 7, **dadurch gekennzeichnet, dass** die beiden Seiten der Schutzabdeckung (12) ein Netz von Längsrippen (37) und/oder Querrippen (38) umfassen.

10. Verkleidungsbaugruppe nach einem der vorhergehenden Ansprüche, **dadurch gekennzeichnet, dass** sie durch ein Gussverfahren durch Einspritzen eines Thermoplasts, vorzugsweise aus verstärktem thermoplastischen Polypropylen hergestellt ist, und die Versteifungen durch ein Verfahren zum Einspritzen eines Fluids ausgebildet sind.

11. Kraftfahrzeug mit einer Untermotorverkleidungsbaugruppe (10), **dadurch gekennzeichnet, dass** es sich bei der Untermotorverkleidung um eine Verkleidungsbaugruppe (10) nach einem der vorhergehenden Ansprüche handelt.
